# EUROPEAN PATENT SPECIFICATION

(11) **EP 1 250 781 B1**
(45) Date of publication and mention of the grant of the patent: **15.08.2007**
(21) Application number: 01947002.0
(22) Date of filing: 24.01.2001
(51) Int. Cl.: H04L 12/64

(54) **COMBINATION SWITCH AND ROUTING-SWITCHING RADIO BASE STATION**
KOMBINIERTER VERMITTLUNGSKNOTEN UND BASISSTATION ZUR WEGELEITUNG UND VERMITTLUNG
COMMUTATEUR MULTIPLE ET STATION DE BASE RADIO A COMMUTATION-ROUTAGE

(30) Priority: 25.01.2000 US 177805 P; 18.01.2001 US 765171
(43) Date of publication of application: 23.10.2002
(73) Proprietor: TELEFONAKTIEBOLAGET LM ERICSSON (publ), 164 83 Stockholm (SE)
(72) Inventor: RODIN, Gunnar, S-640 33 Bettna (SE)
(74) Representative: Hägglund, Mats O.
(86) International application number: PCT/SE2001/000131
(87) International publication number: WO 2001/056235

(56) References cited:
- EP-A- 0 456 947
- WO-A-00/62497
- WO-A-98/14023
- US-A- 4 975 695
- US-A- 5 390 184
- US-A- 5 648 962
- US-A- 6 167 041
- PATENT ABSTRACTS OF JAPAN vol. 1999, no. 09, 30 July 1999 (1999-07-30) & JP 11 112664 A (TOSHIBA CORP), 23 April 1999 (1999-04-23)

## Description

### BACKGROUND OF THE INVENTION

### Technical Field of the Invention

The present invention relates in general to the telecommunications field and, in particular, to an apparatus providing both circuit-switched and packet-switched communications within a telecommunications network.

### Description of Related Art

Radio base stations (RBSs) within a mobile telephony system arc often used as network traffic transmission transfer points to other base stations. Commonly used network topologies for connecting such base stations to each other include the chain, ring, and tree topologies. A single transmission link typically operates at rates of 2, 4, or 8 Mbit/second, which is greater than what is used by a single base station. Therefore, multiple base stations often use a single transmission link. Since the physical transmission medium is usually a radio link, base station sites often house radio link equipment as well.

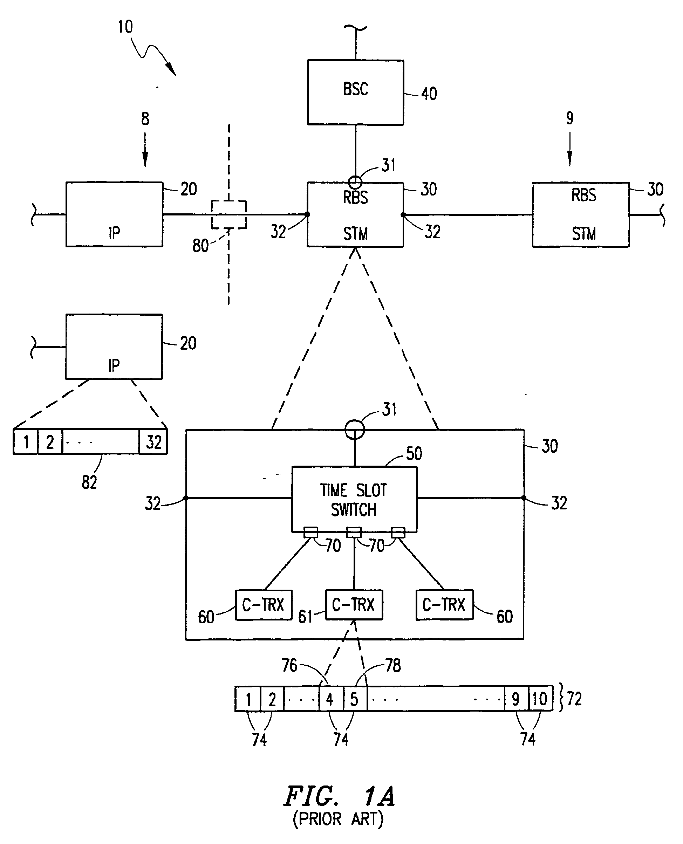

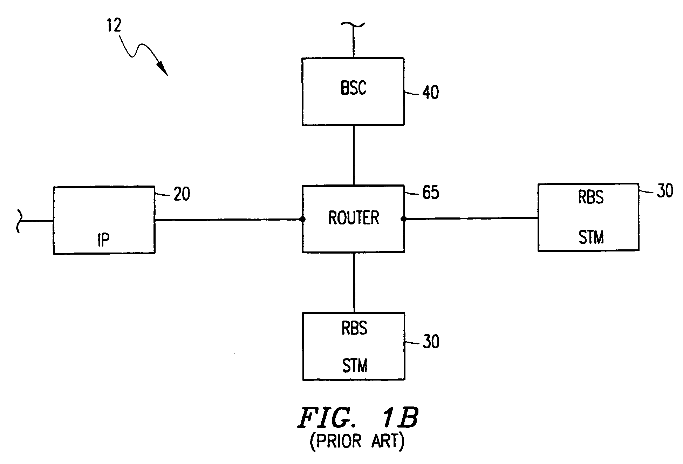

Each base station is typically connected to the transmission network with one or more physical transmission links. The number of links depends on the desired network topology, requirements for redundancy, and the need for transmission capacity at the base station. In a circuit-switched network **9**, an internal switch matrix is used to distribute fractions of connected bandwidth transmissions within the base station to various transceivers and other signaling devices. The built-in switch matrix is sometimes also used for switching excess bandwidth to another link in the transmission network. This link is then used for connection to other base stations. As shown in the prior art network block diagram of Figure 1A, a string of cascaded Internet nodes **20** and radio base stations **30** are connected via network ports **32** within a network **10,** such as a combination Internet Protocol (IP) network **8** and a switching network **9**. In the network **10** topology shown in Figure 1, circuit-switched (STM) RBSs **30** are connected to Internet nodes **20**. This type of mixed network **10** is a common migration scenario as users migrate from a completely circuit-switched network to an IP network. However, the flexibility provided by packet switched connections and the IP Suite in combination with circuit-switched networks requires a change in switching technology. A converter **80** may be needed to convert signals between the circuit-switched network **9** and the IP network **8**.

Each RBS **30** is typically controlled by a Base Station Controller (BSC) **40**, and is connected to the controller **40** using a control/traffic port **31**. For example, the BSC **40** keeps track of resources within the STM RBS **30**. Such resources include the number and type of radio transceivers, and the number and type of internal switching connections. The connections within the switch **50** are known as "circuit-switched connections." The switch **50** setup (i.e., how time slots within a time frame **72** are switched) is accomplished using the BSC **40**. Thus, it is the job of the BSC **40** to track resources within the base station, which include transceivers **60**, **61** and connections within the switch **50**. Once the connections within the switch **50** are set, they are usually not changed unless there is a disturbance within the transmission network **10** or the STM RBS **30** is shut down. The BSC 40 is also the source/destination for connections to from the RBS **30**.

The transmission interface, such as a 2 Mbit/sec G.703 interface, delivers data in 32 byte frames **72,** typically divided into one byte time slots **74.** The switch **50** switches all time slots that have the same position in the frame **72** to one internal destination. For example, considering the circuit-switched transceivers **60**, **61**, the switch **50** may elect to send time slots #4 and #5. **76**, **78**, in each frame **72** to the transceiver **61** via internal interface connection **70**.

The typical m sages which are used to load IP networks include e-mail, file transfer, and accesses to the world-wide web. The length of these messages, which are divided into packets **82**, is often a few hundred bytes, on up to a thousand or more bytes. For mobile radio systems, on the other hand, speech packets are typically used to load the network. These packets are quite small (i.e., on the order of 40-60 bytes) but are transmitted rapidly (i.e., about every 20 milliseconds). This disparity in packet size and frequency of transmission influences the optimal design and routing elements within a mixed network **10**.

IP packets **82** from the nodes **20** can only be inserted into available time slots within the frames **72,** which may require the use of a converter **80.** Thus, IP-formatted information (i.e., packets **82**) can be sent to the BSC **40** without changing the operational characteristics of the switch **50**. In this way, IP-formatted data can be switched without routing, which is inefficient.

As mentioned previously, the current solution is to divide the available bandwidth into small selected portions (i. e., one or more time slots) and assign them to each base station. However, when packet transmissions are used within the mixed network 10, it is inefficient to divide the link bandwidth into fractions (i. e.. one or more consecutive time slots) reserved to different base stations 30. The bandwidth for each device or base station is thus reserved, and cannot be reused by other devices. Thus, the transfer time for individual packets will be fairly long if only a few time slots are used.

Thus, in mixed networks 10, there is a need for efficient data distribution between RBSs 30 and the BSC 40. This need is independent of the transmission network used.

For migration from a circuit-switched network 9 to an IP network 8, it should also be possible to mix IP routing and STM switching.

A related problem is illustrated in prior art figure 1 B. Sending packet data 82 in an all-IP network 12 using conventional RBSs 30 requires an additional router 65, which adds cost and requires space. Thus, a solution which obviates the need for the router 65 to communicate packet data to RBSs 30 in an all-IP network 12 is also needed.

Also, the documents EP-A-0456947, US-A-5390184 and JP 11112664, relate to the same problem.

### SUMMARY OF THE INVENTION

In accord with one embodiment of the present invention, a combination switch includes a time slot switch and a router. The combination switch is in electronic communication with the telecommunications network providing frames of circuit-switched data and packets of IP data. such that the time slot switch receives the circuit-switched data, and the router receives the IP data. The router is in electronic communication with the time slot switch.

The combination switch may include one or more central processing units and one or more digital signal processors. Typically, the central processing unit communicates with the time slot switch and the router while executing one or more network management protocols. such as the Simple Network Management Protocol (SNMP). Typically, a digital signal processor is used to implement the time slot switch, and another digital signal processor is used to implement the router.

In another embodiment, the invention includes a routing-switching base station, which may be a radio base station, having a combination time slot switch and Internet Protocol switch (or separate time slot switch and router elements), in electronic communication with a plurality of transceivers. The base station is in electronic communication with a telecommunications network providing frames of circuit-switched data and packets of IP data. The combination switch receives the data, and sends it on to the plurality of transceivers.

### BRIEF DESCRIPTION OF THE DRAWINGS

A more complete understanding of the method and apparatus of the present invention may be had by reference to the following detailed description when taken in conjunction with the accompanying drawings wherein:
FIGURES 1A and 1B, previously described, are prior art block diagrams of a mixed network and all-IP network, respectively;
FIGURES 2A and 2B are block diagrams of the routing-switching base station and the routing radio base station, respectively, of the present invention; and
FIGURE 3 is a schematic block diagram of the combination switch of the present invention.

### DETAILED DESCRIPTION OF THE DRAWINGS

The preferred embodiment of the present invention and its advantages are best understood by referring to Figures 1-3 of the drawings, like numerals being used for like and corresponding parts of the various drawings.

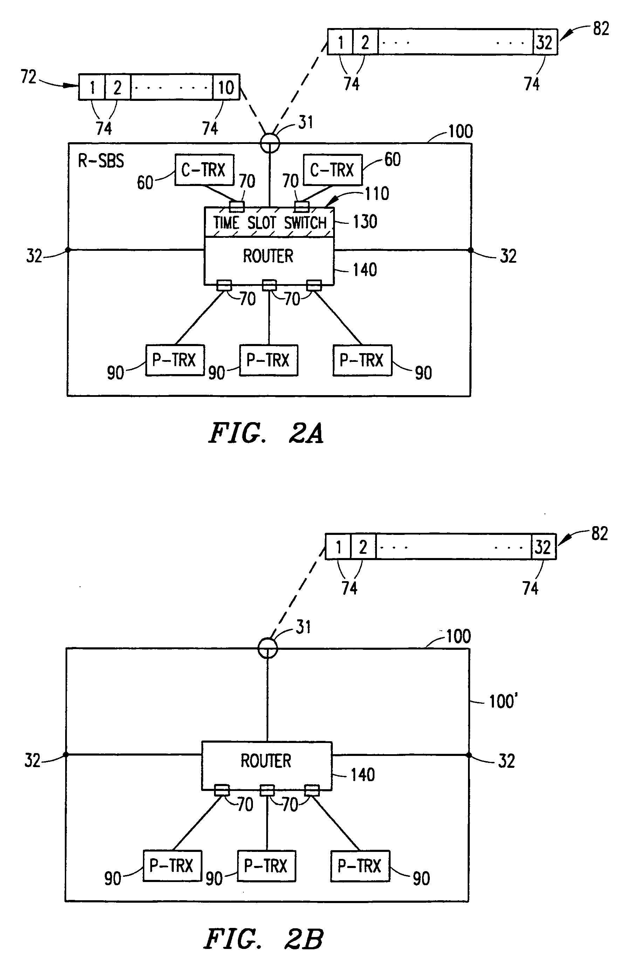

Turning now to Figure 2A, the routing-switching base station **100** of the present invention can be seen. Included within the base station **10**0, which may be a radio base station, is a combination time slot switch and Internet Protocol switch **110**, which may comprise a time slot switch **130** and a router **140**. Through a series of internal interface connections **70**, the combination switch 110 is placed into electronic communication with a plurality of transceivers **60**, **90**. The transceivers may be radio frequency transceivers, optical transceivers, or other transceivers which operate using electromagnetic energy to communicate information. Thus, when a network supplies frames **72** of circuit-switched data to the base station **100**, they may be received by the combination switch **110**, and selected portions of the frames 72 can be sent on to the transceivers **60**. Similarly, when packets **82** are received from the network, the IP data packets **82** can be sent on to the transceivers **90**. The transceivers **60**, **90** may be similar or identical. The numeric differentiation is (only) used to show that either transceiver **60**, **90** may be used to send/receive frames **72** or selected packets **82** of data.

The combination switch **110** (or the individual elements of a time slot switch **130** and a router **140**) located in the routing-switching base station **100** is a network migration solution that lends itself to use in mixed networks having a combination of legacy equipment that operates only with circuit-switched data, and newer equipment that operates using packet-switched data. However, as time goes on, and the use of antiquated circuit-switched equipment disappears, the routing-switching base station **100**, which may be a radio base station, will not require circuit switching functionality. The resulting routing radio base station **100'** will include the router **140** and one or more transceivers **90** in electronic communication with the router **140**, but not a time slot switch 130. This solution, shown in Fig. 2B, solves the problem shown in Fig. 1B, wherein an extra router **65** is needed to interface conventional RBSs **30** to the all-IP network **12**. In the invention, the equivalent of router **65**, i.e., router **140**, is now included within the routing radio base station **100'**.

Thus, a cost efficient solution is provided by the present invention to replace the built-in switch matrix **50** ofprior art base stations **30**. The new (replacement) combination switch **110** is capable of acting as a packet router, as a circuit switch, or as a device which can provide packet-switching and circuit-switching at the same time. The integrated device (i.e., switch) **110** is able to terminate traffic bound for the base station **100**, to forward traffic bound for other base stations, and to distribute traffic internally within the base station **100**. The router **140** within the switch **110** is programmed to understand and implement the IP Suite.

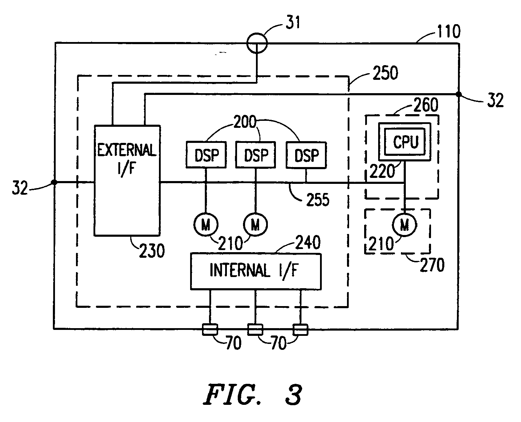

The switch **110** (or the router **140** alone) can be implemented using various logical building elements, and is not meant to be limited by the exemplary illustrations given herein. For example, as shown in Figure 3, the switch **110** can be implemented using a central processing unit **260** and one or more digital signal processing units **200**. Using such a combination of logical building elements provides several advantages. Central processing units have a flexible construction set and can address large amounts of memory. Thus, such central processing units are suitable to process programs that are not time critical, and require complex instruction sets. These units are relatively inexpensive, and it is possible to combine multiple central processing units in a cluster to achieve higher data processing rates.

On the other hand, Digital Signal Processors (DSPs) typically have a specialized instruction set, and access less memory than that which can be accessed by a central processing unit. Thus, DSPs are suitable to process programs that are time critical, and require relatively unsophisticated program instructions. DSPs can also be clustered to provide increased throughput.

The various elements of the combination switch **110** can be grouped into integrated circuits, such as a first integrated circuit **250**, a second integrated circuit 260, and a third integrated circuit **270**. Thus, in the exemplary implementation of the combination switch **110** shown in Figure 3, the first integrated circuit **250** may contain three DSPs **200** communicating with two memories **210**, an external interface 230, and an internal interface **240** using a common internal bus **255.** The bus **255** is also connected to the central processing unit **220,** located on the second integrated circuit **260.** The memory **210** within the third integrated circuit **270** is also connected to the bus **255**. Of course integrated circuits **250**, **260** and **270** can all be further integrated into a single circuit (not shown).

In the combination switch **110** configuration shown in Figure 3, the circuitry within the second integrated circuit **260** (i.e., the central processing unit **220**) can communicate using Direct Memory Access (DMA) with the DSPs **200** and the memories **210** located in the first integrated circuit **250.** Another bus (not shown in Figure 3) may be used for DSP **200** instruction fetches from the memories **210,** or other memories (not shown). The integrated circuit **250** may also contain special hardware and/or firmware for High-level Data Link Control (HDLC) protocol conversion. In the exemplary configuration ofFigure 3, the time slot switch **130** may be implemented using the interfaces **230**, **240**, the memories **210,** and programs in two of the three DSPs **200.** The remaining DSP 200 (and excess capacity of the other DSPs **200**) and the central processing unit **220** and the DSPs **200** are used to execute the IP Instruction Suite. Some of the routines needed for transferring a message through the combination switch **110**, and executed within the DSPs **200**, might include HDLC controls, Point-to-Point Protocol (PPP), Link Control Protocol/Neighbor Discovery Protocol (LCP/NDP) for initiating PPP, multilink PPP, header compression, queuing (e.g., quality of service) and policing algorithms, packet forwarding IP, and the User Datagram Protocol (UDP). Typically, the memory **210** necessary for storing programs executed in the DSPs **200**, along with the memory **210** needed for a data storage, will be a few hundred kilobytes. The DSPs should operate at a program execution speed of approximately one billion instructions per second (i.e., 1,000 Mips).

In the central processing unit **220**, several protocols are required for setup, supervision, exception handling, etc. These include: IP Options Part, IP fragmentation, Open Shortest Path First (OSPF) routing protocol, and the Simple Network Management Protocol (SNMP). The memory **210** required by the central processing unit **220** should be on the order of several megabytes. The operating speed of the central processing unit will typically be about several million instructions per second (e.g., 1-10 Mips).

The routing-switching base station **100**, the routing radio base station **100'**, and the combination switch **110** allow implementation of inexpensive router functionality in the place of conventional radio base stations, which contain only circuit-switching operational elements. Such an implementation allows use of the combination switch as a general IP packet router at little or no additional cost.

The combination switch **110** can be used as an internal packet switch so that packets from different devices can share the entire bandwidth allowed. Thus, the combination switch **110** can use a portion of the bandwidth for the base station **100** for circuit switched data **72**, and another portion of the bandwidth for packet-switched data **82**. Using an internal router **140** for switching will provide faster packet transfer speeds and shorter queuing delays for high priority packets when priority mechanisms are used.

The combination switch **110** configuration also allows internal devices, such as transceivers **60**, **90**, to be addressed as IP nodes, and if desired, to be visible to the external network **10**. Using a router **140** as an internal switching device operating under the IP Suite means that special, non-standard protocols, will not be needed to operate the switch **110**.

Additional advantages of the switch **110** include automatic routing updates when the surrounding network **10** is changed (e.g., using the OSPF protocol); increased possibilities for plug-and-play base stations connected to a routing-switching base station **100**; standardized supervision methods, operation, and maintenance (e.g., using the SNMP protocol); and standardized methods for verifying quality of service, policing, and resource allocation.

During migration operations, there will be the opportunity for connecting routing-switching base stations where circuit-switch connections are required. As noted above, in this case, circuit-switched data can use some fraction of the bandwidth, while IP routed data can use the remaining fraction of the bandwidth. Conversion routines from the IP and circuit-switch formats can be implemented using the combination switch **110** for direct interfacing to transceivers **60, 90.** The functionality of the switch **110**, implemented as described above, can now be changed using software so that the switch **110** can act as a time slot switch **130** alone, a combination switch **130**, or a router **140** alone, and manual visits to the site of the switch **110** to change its function are obviated. Also, as noted above, the routing radio base station **100**' (see Fig. 2B) may only require the presence of a router **140** and transceivers **90** when circuit-switched data is no longer present in the network **10**.

Finally, the DSPs **200** can operate as high performance packet switches, or as high performance circuit-switches. Circuit-switching and packet-switching can also be accomplished simultaneously. The same DSP 200 can perform internal distribution of data to various transceivers **60**, **90** and other signaling devices. The DSPs **200** can also be assigned responsibility for internal data conversion (i.e., from circuit-switching protocols to IP, and vice versa). The DSPs **200** can also handle data routing and buffering, and administer Quality-of-Service functions within the IP Suite. The router **140** can also be used to concentrate several links that are lightly loaded into a single link for better utilization of available bandwidth

Although a preferred embodiment of the method and apparatus of the present invention has been illustrated in the accompanying drawings and described in the foregoing detailed description, it will be understood that the invention is not limited to the embodiment disclosed, but is capable of numerous rearrangements, modifications and substitutions without departing from the scope of the invention as set forth and defined by the following claims.

## Claims

1. A combination switch (110) in electronic communication with a telecommunications network (10), wherein the telecommunications network includes at least one frame (72) of circuit-switched data and at least one packet (82) of Internet Protocol data, **characterized by**:
a time slot switch (130) for receiving each frame of circuit-switched data; and
a router (140) in electronic communication with the time slot switch for receiving each packet of Internet Protocol data.

2. The combination switch (110) of Claim 1, further comprising:
at least one central processing unit (220) in electronic communication with the time slot switch (130) and the router (140).

3. The combination switch (110) of Claim 2, wherein the at least one central processing unit (220) is adapted to execute a network management protocol.

4. The combination switch (110) of Claim 2, wherein the time slot switch (130) is implemented using at least one first digital signal processor (200) in electronic communication with the at least one central processing unit (220).

5. The combination switch (110) of Claim 4, wherein the router (140) is implemented using at least one second digital signal processor (200) in electronic communication with the at least one central processing unit (220).

6. A routing-switching base station (100) in electronic communication with a telecommunications network (10), wherein the telecommunications network includes at least one frame (72) of circuit-switched data and at least one packet (82) of Internet Protocol data, **characterized by**:
- a time slot switch (130) for receiving each frame of circuit-switched data and
- an Internet Protocol router switch (140) for receiving each packet of Internet Protocol data; and
a plurality of transceivers (60, 90) wherein each one of the plurality of transceivers is in electronic communication with the time slot switch or the Internet Protocol router switch.

7. The routing-switching base station (100) of Claim 6, wherein at least one of the plurality of transceivers (60, 90) is adapted to receive a selected portion of the at least one frame (72) of circuit-switched data from the time slot switch (130) and Internet Protocol router switch (140).

8. The routing-switching base station (100) of Claim 6, wherein at least one of the plurality of transceivers (60, 90) is adapted to receive at least one packet (82) of Internet Protocol data from the time slot switch (130) and Internet Protocol router switch (140).

9. The routing-switching base station (100) of Claim 6, further comprising:
at least one central processing unit (220) in electronic communication with the time slot switch (130) and Internet Protocol router switch (140).

10. The routing-switching base station (100) of Claim 9, wherein the at least one central processing unit (220) is adapted to execute a network management protocol.

11. The routing-switching base station (100) of Claim 9, wherein the time slot switch and Internet Protocol router switch is implemented using at least one digital signal processor (200) in electronic communication with the at least one central processing unit (220).

12. The routing-switching base station (100) of claim 6, wherein at least one of the plurality of transceivers (60, 90) is a radio frequency transceiver.

13. The routing-switching base station of any of claims 6-12, wherein the time slot switch (130) for receiving each frame of circuit-switched data and the Internet Protocol router switch (140) for receiving each packet of Internet Protocol data, are located in a combination switch (110).

## Patentansprüche

1. Kombinations-Vermittlungsstelle (110) in elektronischer Kommunikation mit einem Telekommunikationsnetz (10), wobei das Telekommunikationsnetz wenigstens einen Rahmen (72) von leitungsvermittelten Daten und wenigstens ein Paket (82) von Internet Protokoll Daten einschließt, **gekennzeichnet durch**:
eine Zeitschlitz-Vermittlungsstelle (130) zum Empfangen jedes Rahmens von leitungsvermittelten Daten; und
einen Router (140) in elektronischer Kommunikation mit der Zeitschlitz- Vermittlungsstelle zum Empfangen jedes Pakets von Internet Protokoll Daten.

2. Kombinations-Vermittlungsstelle (110) nach Anspruch 1 ferner umfassend:
wenigstens eine Zentralverarbeitungseinheit (220) in elektronischer Kommunikation mit der Zeitschlitz-Vermittlungsstelle (130) und dem Router (140).

3. Kombinations-Vermittlungsstelle (110) nach Anspruch 2, wobei die wenigstens eine Zentralverarbeitungseinheit (220) dafür ausgelegt ist, um ein Netzmanagementprotokoll auszuführen.

4. Kombinations-Vermittlungsstelle (110) nach Anspruch 2, wobei die Zeitschlitz-Vermittlungsstelle (130) unter Verwendung wenigstens eines ersten Digitalsignalprozessors (200) in elektronischer Kommunikation mit der wenigstens einen Zentralverarbeitungseinheit (220) implementiert ist.

5. Kombinations-Vermittlungsstelle (110) nach Anspruch 4, wobei der Router (140) unter Verwendung wenigstens eines zweiten Digitalsignalprozessors (200) in elektronischer Kombination mit der wenigstens einen Zentralverarbeitungseinheit (220) implementiert ist.

6. Weglenkungs-Vermittlungs-Basisstation (100) in elektronischer Kombination mit einem Telekommunikationsnetz (10), wobei das Telekommunikationsnetz wenigstens einen Rahmen (72) von leitungsvermittelten Daten und wenigstens ein Paket (82) von Internet Protokoll Daten einschließt, **gekennzeichnet durch**:
- eine Zeitschlitz-Vermittlungsstelle (130) zum Empfangen jedes Rahmens von leitungsvermittelten Daten und
- eine Internet Protokoll Router-Vermittlungsstelle (140) zum Empfangen jedes Pakets von Internetprotokoll Daten; und
eine Vielzahl von Sender/Empfängern (60, 90), wobei jeder einzelne der Vielzahl von Sender/Empfängern in elektronischer Kommunikation mit der Zeitschlitz-Vemiittlungsstelle oder der Internet Protokoll Router-Vermittlungsstelle ist.

7. Weglenkungs-Vermittlungs-Basisstation (100) nach Anspruch 6, wobei wenigstens einer der Vielzahl von Sender/Empfängern (60, 90) ausgelegt ist, um einen gewählten Abschnitt des wenigstens einen Rahmens (72) von leitungsvermittelten Daten von der Zeitschlitz-Vermittlungsstelle (130) und der Internet Protokoll Router-Vermittlungsstelle (140) zu empfangen.

8. Weglenkungs-Vermittlungs-Basisstation (100) nach Anspruch 6, wobei wenigstens einer der Vielzahl von Sender/Empfängern (60, 90) ausgelegt ist, um wenigstens ein Paket (82) von Internet Protokoll Daten von der Zeitschlitz-Vermittlungsstelle (130) und der Internet Protokoll Router-Vermittlungsstelle (140) zu empfangen.

9. Weglenkungs-Vermittlungs-Basisstation (100) nach Anspruch 6, ferner umfassend:
wenigstens eine Zentralverarbeitungseinheit (220) in elektronischer Kommunikation mit der Zeitschlitz-Vermittlungsstelle (130) und der Internet Protokoll Router-Vermittlungsstelle (140).

10. Weglenkungs-Vermittlungs-Basisstation (100) nach Anspruch 9, wobei die wenigstens eine Zentralverarbeitungseinheit (220) ausgelegt ist, um ein Netzmanagementprotokoll auszuführen.

11. Weglenkungs-Vermittlungs-Basisstation (100) nach Anspruch 9, wobei die Zeitschlitz-Vermittlungsstelle und die Internet Protokoll Router-Vermittlungsstelle unter Verwendung wenigstens eines Digitalsignalprozessors (200) in elektronischer Kommunikation mit der wenigstens einen Zentralverarbeitungseinheit (220) implementiert ist.

12. Weglenkungs-Vermittlungs-Basisstation (100) nach Anspruch 6, wobei wenigstens einer der Vielzahl von Sender/Empfängern (60, 90) ein Funkfrequenz-Sender/Empfänger ist.

13. Weglenkungs-Vermittlungs-Basisstation nach irgendeinem der Ansprüche 6-12, wobei die Zeitschlitz-Vermittlungsstelle (130) zum Empfangen jedes Rahmens von leitungsvermittelten Daten und die Internet Protokoll Router-Vermittlungsstelle (140) zum Empfangen jedes Pakets von Internet Protokoll Daten in einer Kombinations-Vermittlungsstelle (110) angeordnet sind.

## Revendications

1. Commutateur multiple (110) en communication électronique avec un réseau de télécommunication (10), dans lequel le réseau de télécommunication comprend au moins une trame (72) de données de circuit commuté et au moins un paquet (82) de données de protocole Internet, **caractérisé par** :
un commutateur de tranche de temps (130) pour recevoir chaque trame de données de circuit commuté ; et
un routeur (140) en communication électronique avec le commutateur de tranche de temps pour recevoir chaque paquet de données de protocole Internet.

2. Commutateur multiple (110) selon la revendication 1, comprenant en outre :
au moins une unité de traitement centrale (220) en communication électronique avec le commutateur de tranche de temps (130) et le routeur (140).

3. Commutateur multiple (110) selon la revendication 2, dans lequel la au moins une unité de traitement centrale (220) est adaptée pour exécuter un protocole de gestion de réseau.

4. Commutateur multiple (110) selon la revendication 2, dans lequel le commutateur de tranche de temps (130) est implémenté en utilisant au moins un premier processeur de signal numérique (200) en communication électronique avec la au moins une unité de traitement centrale (220).

5. Commutateur multiple (110) selon la revendication 4, dans lequel le routeur (140) est implémenté en utilisant au moins un second processeur de signal numérique (200) en communication électronique avec la au moins une unité de traitement centrale (220).

6. Station de base de commutation de routage (100) en communication électronique avec un réseau de télécommunication (10), dans lequel le réseau de télécommunication comprend au moins une trame (72) de données de circuit commuté et au moins un paquet (82) de données de protocole Internet, **caractérisé par** :
- un commutateur de tranche de temps (130) pour recevoir chaque trame de données de circuit commuté et
- un commutateur de routeur de protocole Internet (140) pour recevoir chaque paquet de données de protocole Internet ; et
une pluralité d'émetteurs/récepteurs (60, 90) dans lesquels chacun de la pluralité des émetteurs/récepteurs est en communication électronique avec le commutateur de tranche de temps ou le commutateur de routeur de protocole Internet.

7. Station de base de commutation de routage (100) selon la revendication 6, dans laquelle au moins un de la pluralité des émetteurs/récepteurs (60, 90) est adapté pour recevoir une partie sélectionnée d'au moins une trame (72) de données de circuit commuté à partir du commutateur de tranche de temps (130) et du commutateur de routeur de protocole Internet (140).

8. Station de base de commutation de routage (100) selon la revendication 6, dans laquelle au moins un de la pluralité des émetteurs/récepteurs (60, 90) est adapté pour recevoir au moins un paquet (82) de données de protocole Internet à partir du commutateur de tranche de temps (130) et du commutateur de routeur de protocole Internet (140).

9. Station de base de commutation de routage (100) selon la revendication 6, comprenant en outre :
au moins une unité de traitement centrale (220) en communication électronique avec le commutateur de tranche de temps (130) et le commutateur de routeur de protocole Internet (140).

10. Station de base de commutation de routage (100) selon la revendication 9, dans laquelle au moins une unité de traitement centrale (220) est adaptée pour exécuter un protocole de gestion de réseau.

11. Station de base de commutation de routage (100) selon la revendication 9, dans laquelle le commutateur de tranche de temps et le commutateur de routeur de protocole Internet sont implémentés en utilisant au moins un processeur de signal numérique (200) en communication électronique avec la au moins une unité de traitement centrale (220).

12. Station de base de commutation de routage (100) selon la revendication 6, dans laquelle au moins un de la pluralité des émetteurs/récepteurs (60, 90) est un émetteur/récepteur de radio fréquence.

13. Station de base de commutation de routage selon l'une quelconque des revendications 6 à 12, dans laquelle le commutateur de tranche de temps (130) pour recevoir chaque trame des données de circuit commuté et le commutateur de routeur de protocole Internet (140) pour recevoir chaque paquet de données de protocole Internet sont situés dans un commutateur multiple (110).
